Europäisches Patentamt

European Patent Office

Office européen des brevets

(19)

(11) Veröffentlichungsnummer : **0 032 715**
**B1**

(12)

# EUROPÄISCHE PATENTSCHRIFT

(45) Veröffentlichungstag der Patentschrift :
**11.04.84**

(21) Anmeldenummer : **81100205.4**

(22) Anmeldetag : **14.01.81**

(51) Int. Cl.³ : **B 29 F 3/04**, B 29 D 23/04,
B 29 D 7/04

(54) **Zentriervorrichtung für Formwerkzeuge von Strangpressen.**

(30) Priorität : **18.01.80 DE 3001705**

(43) Veröffentlichungstag der Anmeldung :
**29.07.81 Patentblatt 81/30**

(45) Bekanntmachung des Hinweises auf die Patenterteilung : **11.04.84 Patentblatt 84/15**

(84) Benannte Vertragsstaaten :
**AT BE CH DE FR GB IT LI LU NL SE**

(56) Entgegenhaltungen :
DE-A- 1 629 784
DE-A- 2 023 008
DE-A- 2 113 054
DE-A- 2 654 001
DE-A- 2 723 991
DE-C- 1 908 933
GB-A- 2 000 570

(73) Patentinhaber : **WAVIN B.V.**
**Händellaan 251**
**NL-8031 EM Zwolle (NL)**

(72) Erfinder : **Budel, Eduard Josef**
**Nieuwe Deventerweg 148**
**NL-8014 AL Zwolle (NL)** .
Erfinder : **Fehrmann, Heinrich**
**Oosterescher Flerr 17**
**D-4471 Haren (DE)**
Erfinder : **De Kok, Johan**
**Neptunusstraat 28**
**NL-7771 EX Hardenberg (NL)**

(74) Vertreter : **Busse & Busse Patentanwälte**
**Postfach 1226 Grosshandelsring 6**
**D-4500 Osnabrück (DE)**

EP 0 032 715 B1

Jouve, 18, rue St-Denis, 75001 Paris, France

Zentriervorrichtung für Formwerkzeuge von Strangpressen

Die Erfindung bezieht sich auf eine Zentriervorrichtung für Formwerkzeuge von Strangpressen, bei denen ein Außendorn gemeinsam mit einem Innendorn einen Durchtrittsspalt für Kunststoff od. dgl. Strangpreßmasse begrenzt, mit einer Vielzahl von am Außendorn abgestützten, über den Umfang verteilt in einer Radialebene angeordneten, in radialer Richtung einstellbaren Zentriergliedern, die als radial verschieblich geführte Druckstößel ausgebildet sind, und mit am Außendorn schwenkbar abgestützten, jeweils mittels einer Spannvorrichtung betätigbaren und ein Übersetzungsgetriebe für die Spannkraft bildenden Stellhebeln, die mit den Druckstößeln in direktem Eingriff stehen, als Einzelantriebe.

Bei einer aus der De-A-2 023 008 bekannten Zentriervorrichtung dieser Art ist jeweils nur ein Druckstößel eines Paares von fluchtend gegenüberliegenden Druckstößeln mittels eines Stellhebels einstellbar. Der jeweils gegenüberliegende zweite Druckstößel eines Druckstößelpaares ist hingegen federnd abgestützt und nimmt eine Lage ein, die von der Lage des mittels des Stellhebels einstellbaren Druckstößels abhängt. Die Stellhebel sind als doppelarmige Hebel ausgebildet und um Schwenkachsen schwenkbar, die in einer Radialebene zur Längsmittelachse des Extrusionskopfes verlaufen. Zum Verschwenken der Stellhebel sind diese an ihrem dem zugehörigen Druckstößel abgewandten Ende mit einer Stellschraube versehen. Eine derartige Ausgestaltung verringert zwar durch die Wirkung der Stellhebel die für eine Verstellung der Druckstößel aufzubringenden Kräfte im Vergleich mit Zentriervorrichtungen mit direkt auf Druckstößel wirkenden Stellschrauben oder Stellmotoren gemäß DE-A-21 13 050, jedoch ist die Ausbildung und Anordnung der Stellhebel platzraubend und die erreichbare Einstellungspräzision durch das Vorhandensein von Druckstößeln begrenzt, die lediglich federnd abgestützt und nicht selbst einstellbar sind.

Der Erfindung liegt die Aufgabe zugrunde, eine Zentriervorrichtung der eingangs genannten Art zu schaffen, die mit baulich sehr einfachen Mitteln und bei geringem Platzbedarf eine hohe Einstellungspräzision ermöglicht, wie sie insbesondere für Formwerkzeuge von Strangpressen mit horizontaler Extrusionsrichtung und mit großen Durchmessern der Extrudate erforderlich ist.

Zur Lösung dieser Aufgabe sieht die Zentriervorrichtung nach der Erfindung vor, daß jedem Druckstößel ein einarmiger Stellhebel zugeordnet ist, der im Bereich zwischen seinem Schwenklager und der Angriffsstelle seiner Spannvorrichtung mit seinem Druckstößel direkt in Eingriff steht, und daß die Schwenkachsen der Stellhebel parallel zur Längsmittelachse des Formwerkzeugs ausgerichtet sind.

Eine derartige Ausbildung erlaubt aufgrund des geringen Raumbedarfs das Vorsehen einer auch verhältnismäßig großen Zahl von Druckstößeln samt Einzelantrieben für diese ohne nennenswerte Veränderungen des Extrusionskopfes oder störende Rückwirkungen auf dessen Gestaltung. Die positive Einstellungsmöglichkeit für jeden Druckstößel sichert dabei eine hohe Einstellungspräzision, die besonders bei großformatigen und ggf. zusätzlich dünnwandigen Extrudaten von großer Bedeutung ist.

Weitere Ausgestaltungen und Einzelheiten der Erfindung ergeben sich aus den Ansprüchen 2 bis 8. Weitere Vorteile ergeben sich aus der Beschreibung in Verbindung mit der Zeichnung, in der mehrere Ausführungsbeispiele des Gegenstandes der Erfindung näher veranschaulicht sind. Im einzelnen zeigen :

Figur 1 eine Stirnansicht, teilweise im Schnitt, eines Formwerkzeugs für eine Strangpresse mit einer ersten Ausführung einer Zentriervorrichtung nach der Erfindung für die Einstellung eines Mündungsteils des Außendorns relativ zum Innendorn,

Figur 2 einen abgebrochenen, vereinfachten Axialschnitt durch das Werkzeug nach Fig. 1,

Figur 3 einen Axialschnitt durch ein anderes Formwerkzeug mit einer zweiten Ausführung einer Zentriervorrichtung nach der Erfindung für die Einstellung des Innendorns relativ zum Außendorn,

Figur 4 in der linken Hälfte eine Stirnansicht und in der rechten Hälfte einen Querschnitt durch Werkzeug und Zentriervorrichtung nach Fig. 3,

Figur 5 eine vergrößerte Schnittdarstellung der Zentriervorrichtung nach Fig. 4,

Figur 6 einen Schnitt durch die Zentriervorrichtung nach der Linie VI-VI in Fig. 5, und

Figur 7 eine Draufsicht auf die Zentriervorrichtung nach Fig. 5 und 6.

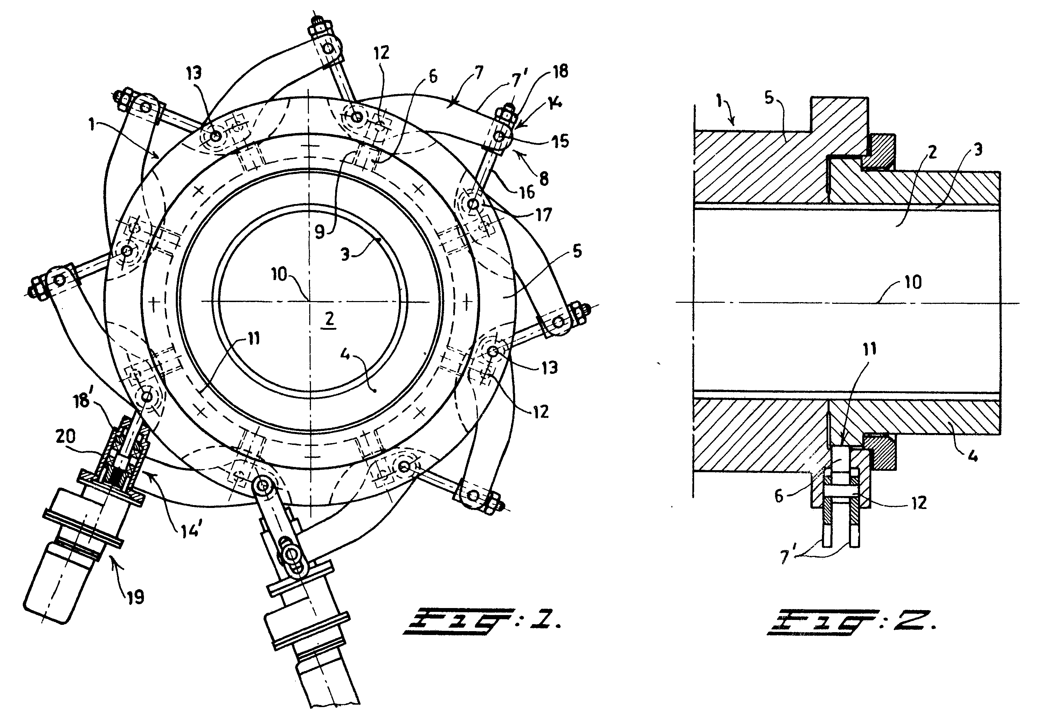

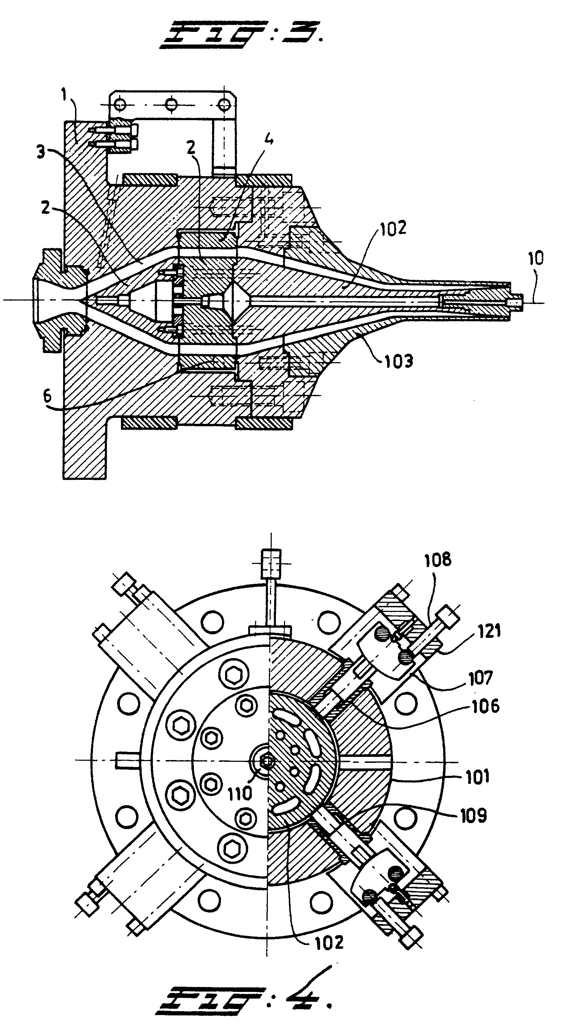

Das in Fig. 1 und 2 schematisch veranschaulichte Formwerkzeug besteht im wesentlichen aus einem Außendorn oder -konus 1 und einem Innendorn oder -konus 2. Diese begrenzen gemeinsam einen formgebenden Durchtrittsspalt 3 für Kunststoff od. dgl. Strangpreßmasse. Bei dem dargestellten Beispiel hat dieser Durchtrittsspalt für die Herstellung zylindrischer Kunststoffrohre eine kreisringförmige Gestalt.

Zur Erzielung einer gleichmäßigen Wanddicke bedarf der Durchtrittsspalt 3 der Einstellbarkeit, was bei dem dargestellten Beispiel nach Fig. 1 und 2 durch Radialverstellbarkeit des Mündungsteils oder Mundstücks 4 des Außendorns 1 relativ zum Innendorn 2 herbeigeführt ist. Der Mündungsteil 4 ist hierzu an dem mit dem (nicht dargestellten) Gehäuse der Strangpresse ortsfest verbundenen Hauptteil 5 des Außendorns 1 über eine Zentriervorrichtung abgestützt (und über einen Klemmflansch festlegbar), die aus einer Mehrzahl (zumindest drei) Druckstößeln 6 mit Stellhebeln 7 und Spannvorrichtungen 8 besteht. Die Druckstößel 6 sind in Bohrungen 9 des Hauptteils 5 des Außendorns 1 radial bzw. senkrecht zur Längsmittelachse 10 des Formwerkzeugs verschieblich geführt. Sie stützen mit ihren Innenenden den Mündungsteil 4 an dessen Zentrierfläche 11 ab und sind im Bereich ihrer Außenenden über Gelenkbolzen 12 jeweils mit ihrem Stellhebel 7 verbunden. Dieser besteht, wie Fig. 2 näher erkennen läßt, aus zwei parallelen Hebelteilen 7'. Jeder Stellhebel 7 ist am Hauptteil 5 des Außendorns 1 über einen Schwenklagerbolzen 13 schwenkbar abgestützt. Die Schwenklagerachsen sind parallel zur Längsmittelachse 10 des Formwerkzeugs ausgerichtet.

An den freien äußeren Enden tragen die Stellhebel 7 eine Verbindungsbüchse 14, die mittels diametralen Gelenkzapfen 15 an den beiden Hebelteilen 7' eines jeden Stellhebels 7 ihrerseits um eine Achse schwenkbar angebracht ist, die sich parallel zur Längsmittelachse 10 des Formwerkzeugs erstreckt. Durch diese Verbindungsbüchse 14 greift ein Gewindebolzen 16 mit Außengewinde hindurch, der seinerseits um eine zur Längsmittelachse 10 des Formwerkzeugs parallel ausgerichtete Schwenkachse am Hauptteil 5 des Außendorns 1 schwenkbar angelenkt ist. Bei dem Beispiel nach Fig. 1 und 2 weist der Gewindebolzen 16 hierzu ein Lagerauge 17 auf, das zwischen den Hebelteilen 7' eines benachbarten Stellhebels 7 dessen Schwenklagerbolzen 13 umgreift.

Auf das freie Ende eines jeden Gewindebolzens 16 ist, wie dies die Fig. 1 bei der Mehrzahl der Gewindebolzen veranschaulicht, eine Spannmutter 18 aufgeschraubt, welche die Verbindungsbüchse 14 außenseitig hintergreift. Beim Anziehen der Spannmutter 18 überträgt dementsprechend der Stellhebel 7 eine Druckkraft auf seinen Druckstößel 6, die, wie ersichtlich, ein Vielfaches der in den Stellhebel 7 eingeleiteten Spannkraft beträgt. Dieses Übersetzungsverhältnis kann ohne weiteres so gestaltet werden, daß auch bei großen Formwerkzeugen die Spannkräfte verhältnismäßig gering sind und mühelos von Hand mit einem normalen Schraubenschlüssel aufgebracht werden können. Die Spannkräfte können vorgabegemäß so gering ein, daß für den Einstellvorgang verhältnismäßig kleine Elektro-Getriebemotoren als Stellmotore 19 Verwendung finden können. Für einen solchen Fall kann die Verbindungsbüchse als Trägerbüchse 14' für den anflanschbaren Stellmotor 19 ausgebildet sein. In ihrem Inneren nimmt diese Trägerbüchse 14' eine Spannmutter 18' auf, welche Teil einer Kupplung 20 zur Übertragung des Antriebs von der Motorwelle des Stellmotors 19 auf die Spannmutter 18 bildet. Dies ermöglicht, bei Ausfall aller oder einzelner Stellmotore deren Abnahme, wonach der Einstellvorgang mit Hilfe eines Schraubenschlüssels von Hand vornehmbar ist. Im Falle des motorischen Antriebs der Druckstößel 6 (in Fig. 1 für zwei Druckstößel versinnbildlicht) kann je Stellhebel 7 eine Sicherungslasche 21 oder ein sonstiges Sicherungselement vorgesehen sein, das ein Abdrehen der Spannmutter 18' von ihrem Gelenkbolzen 16 verhindert. Mit derartigen motorischen Spannvorrichtungen kann ein vollautomatisches Einstellen in Abhängigkeit von jeweils ermittelten Abweichungen in der Dicke der Wandungen von vorgegebenen Sollwerten erfolgen.

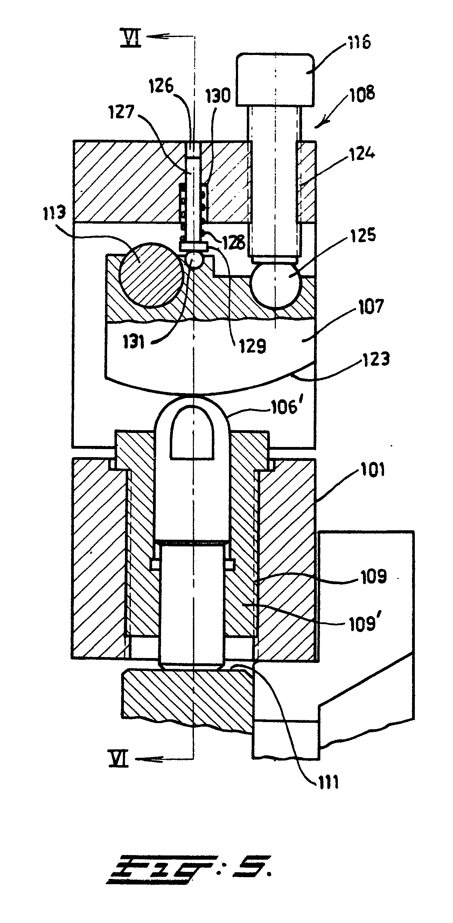

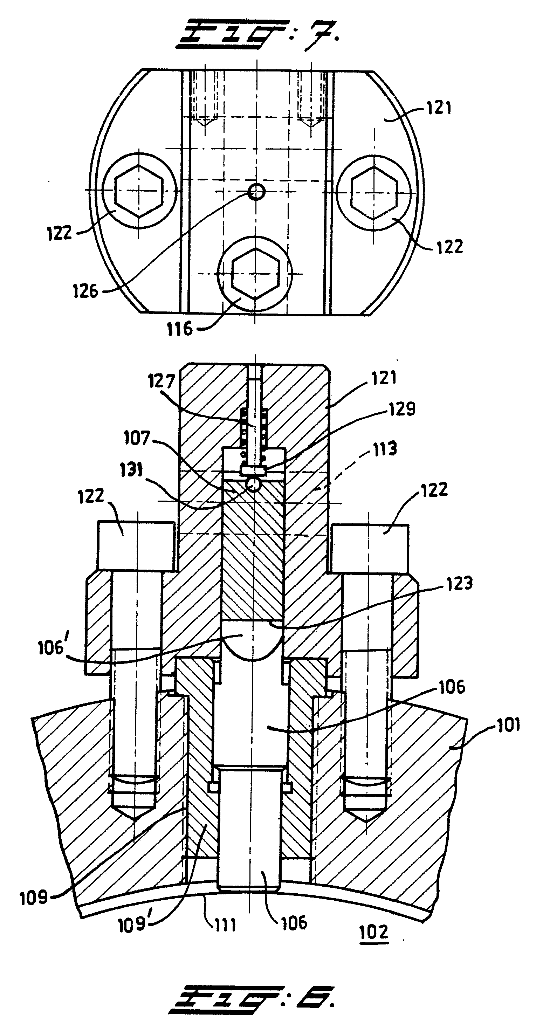

Die Fig. 3 und 4 veranschaulichen ein Formwerkzeug, wie es zur Herstellung von Wellrohren Anwendung findet. Auch dieses Formwerkzeug besteht im wesentlichen aus einem Außendorn 101, einem Innendorn 102 und einem von beiden umgrenzten Durchtrittsspalt 103 für den Durchtritt des Kunststoffes. Bei diesem Formwerkzeug dient die erfindungsgemäße Zentriervorrichtung zur Zentrierung bzw. Einstellung des Innendorns 102 in Bezug auf den Außendorn 101. Die aus Fig. 4, näher aber aus den Fig. 5 bis 7, ersichtliche Zentriervorrichtung besteht bei diesem Beispiel aus vier zusammenwirkenden Einheiten untereinander gleicher Ausbildung. Jede dieser Einheiten umfaßt einen Druckstößel 106, der radial in einer Führungsbuchse 109' verschieblich geführt ist, welche in eine Radialbohrung 109 des Außendorns 101 eingesetzt ist. Das Innenende des Druckstößels 106 wirkt auf eine Zentrierfläche 111 des Innendorns 102 und das Außenende des Druckstößels ist als gerundeter Gleitkopf 106' ausgeführt. Ferner umfaßt jede Einheit einen Stellhebel 107 und eine auf den Stellhebel einwirkende Spannvorrichtung 108. Stellhebel und Spannvorrichtung sind in einem Lager und Widerlager bildenden Gehäuse 121 untergebracht, das mit Schrauben 122 auf den Außendorn 101 aufschraubbar ist. In dem Gehäuse 121 ist der Stellhebel 107 mittels eines Schwenklagerbolzens 113 um eine Schwenkachse schwenkbar gelagert, die wiederum parallel zur Längsmittelachse 110 des Formwerkzeugs ausgerichtet ist. An seiner dem Druckstößel 106 zugewandten Seite weist der Stellhebel 107 eine Kurvenbahn 123 auf, an der der Stellhebel mit dem Gleitkopf 106' des Druckstößels 106 in Druckeingriff steht.

Die Spannvorrichtung besteht bei diesem Beispiel aus einer Spannschraube 116, die als Innensechskant-Schraube ausgeführt sein kann und eine Gewindebohrung 124 im Gehäuse 121 durchgreift. Das Ende der Stellschraube 116 wirkt auf ein im Stellhebel 107 gelagertes Ausgleichsstück 125 ein, das von einer Kugel, einem Zapfen od. dgl. gebildet sein kann. Es besteht auch die Möglichkeit, die Stellschraube 116 an ihrem Ende mit einem entsprechenden Ausgleichsstück zu versehen, das dann in eine entsprechende Aufnahme am Stellhebel 107 eingreift. Da das Gehäuse 121 den Stellhebel 107 mehr oder weniger der Sicht entzieht, ist das Gehäuse mit einer nach außen führenden Bohrung 126 versehen, in der ein Meßstift 127 als Stellungsanzeiger eingesetzt ist. Dieser Meßstift ist von einer Spiraldruckfeder 128 umgeben, die sich einerseits auf einem unteren Bund 129 des Meßstiftes 127 und andererseits an einer Schulter 130 der Bohrung 126 abstützt und den Meßstift 127 in Druckeingriff am Stellhebel 107 anfedert. Auch das Ende des Meßstiftes steht über ein Ausgleichsstück 131, das im Stellhebel 107 gelagert ist, mit dem Stellhebel 107 in Kontakt.

Auch eine derartige Ausführung der Zentriervorrichtung kann ohne weiteres mit Stellmotoren für den motorischen Antrieb der Spannschrauben 116 oder entsprechender Spannschraubelemente versehen werden. Das Gehäuse 121 bietet sich dabei unmittelbar als Träger für das Anflanschen eines Stellmotors an.

## Ansprüche

1. Zentriervorrichtung für Formwerkzeuge von Strangpressen, bei denen ein Außendorn (1) gemeinsam mit einem Innendorn (2) einen Durchtrittsspalt (3) für Kunststoff o. dgl. Strangpreßmasse begrenzt, mit einer Mehrzahl von am Außendorn (1) abgestützten, über den Umfang verteil in einer Radialebene angeordneten, in radialer Richtung einstellbaren Zentriergliedern, die als radial verschieblich geführte Druckstößel (6 ; 106) ausgebildet sind, und mit am Außendorn (2) schwenkbar abgestützten, jeweils mittels einer Spannvorrichtung (8 ; 108) betätigbaren und ein Übersetzungsgetriebe für die Spannkraft bildenden Stellhebeln (7 ; 107), die mit den Druckstößeln (6 ; 106) in direktem Eingriff stehen, als Einzelantriebe, dadurch gekennzeichnet, daß jedem Druckstößel (6 ; 106) ein einarmiger Stellhebel (7 ; 107) zugeordnet ist, der im Bereich zwischen seinem Schwenklager (13 ; 113) und der Angriffsstelle seiner Spannvorrichtung (8 ; 108) mit seinem Druckstößel (6 ; 106) direkt in Eingriff steht, und daß die Schwenkachsen der Stellhebel (7 ; 107) parallel zur Längsmittelachse (10 ; 110) des Formwerkzeugs ausgerichtet sind.

2. Vorrichtung nach Anspruch 1, dadurch gekennzeichnet, daß die Druckstößel (6 ; 106) sich mit einem gerundeten Gleitkopf (106') auf einer Kurvenbahn (123) der Stellhebel (107) abstützen.

3. Vorrichtung nach Anspruch 1 oder 2, dadurch gekennzeichnet, daß die Spannvorrichtung (8 ; 108) als Schraubspannvorrichtung ausgebildet ist und einen Gewindebolzen (16), der eine am Stellhebel (7) angelenkte Verbindungsbüchse (14) durchgreift, und eine die Verbindungsbüchse hintergreifende Spannmutter (18) umfaßt.

4. Vorrichtung nach Anspruch 3, dadurch gekennzeichnet, daß der Gewindebolzen (16) gelenkig mit einem zugleich die Schwenklagerachse für einen benachbarten Stellhebel bildenden Schwenklagerbolzen (13) verbunden ist.

5. Vorrichtung nach Anspruch 3 oder 4, dadurch gekennzeichnet, daß die Verbindungsbüchse als Trägerbüchse (14') für einen anflanschbaren Stellmotor (19) ausgebildet ist und eine den Antrieb von der Motorwelle auf die Spannmutter (18') übertragende Kupplung (20) umschließt.

6. Vorrichtung nach einem oder mehreren der Ansprüche 1 bis 4, dadurch gekennzeichnet, daß die Spannvorrichtung (108) von einer in einer Gewindebohrung (124) eines Widerlagers (121) abgestützten Spannschraube (116) gebildet ist, deren Ende auf ein im Stellhebel (107) gelagertes Ausgleichstück (125) einwirkt oder ein solches umfaßt.

7. Vorrichtung nach einem oder mehreren der Ansprüche 1 bis 6, dadurch gekennzeichnet, daß Stellhebel (107) und Spannvorrichtung (108) jeweils eine in einem Gehäuse (121) untergebrachte, selbständige, anschraubbare Anbaueinheit bilden.

8. Vorrichtung nach Anspruch 7, gekennzeichnet durch einen in einer Bohrung (126) des Gehäuses (121) abgefedert eingesetzten, sich am Stellhebel (107) abstützenden Meßstift (127) als Stellungsanzeige.

## Claims

1. A centering device for shaping tools of extrusion presses, wherein an outer mandrel (1) together with an inner mandrel (2) defines a through gap (3) for plastics material or the like extrusion material, comprising a plurality of centering members supported on the outer mandrel (1), located in a radial plane and distributed over the periphery and adjustable in radial direction, said centering members being constructed in the form of push rods (6 ; 106) guided for radial displacement, and comprising adjustable levers (7 ; 107), pivotally supported on the outer mandrel (2) and each actuable by means of a tightening device (8 ; 108) and forming a transmission gear for the tightening force, said adjustable levers being in direct engagement with the push rods (6 ; 106) as individual drives, characterised in that each push rod (6 ; 106) has a one-arm adjustable lever (7 ; 107) associated thereto which in the region between its pivot bearing (13 ; 113) and the point of action of its tightening device (8 ; 108) is in direct engagement with its push rod (6 ; 106), and in that the pivotal axes of the adjustable levers (7 ; 107) are aligned parallel to the longitudinal central axis (10 ; 110) of the shaping tool.

2. Device as claimed in Claim 1, characterised in that the push rods (6 ; 106) are supported by a rounded sliding head (106') on a curved sector (123) of the adjustable lever (107).

3. Device as claimed in Claim 1 or 2, characterised in that the tightening device (8 ; 108) is constructed in the form of a screw tightening device and comprises a threaded bolt (16) which engages through a connecting sleeve (14) articulated on the adjustable lever (7), and a tightening nut (18) which engages behind the connecting sleeve.

4. Device as claimed in Claim 3, characterised in that the threaded bolt (16) is articulately connected to a pivot pin (13) which simultaneously forms the pivotal axis for an adjacent adjustable lever.

5. Device as claimed in Claim 3 or 4, characterised in that the connecting sleeve is constructed in the form of a supporting sleeve (14') for a flange-mountable servo-motor (19) and surrounds a coupling (20) transmitting the drive from the motor shaft to the tightening nut (18'),

6. Device as claimed in one or more of the Claims 1 to 4, characterised in that the tightening device (108) is formed by a tightening screw (116) which is supported in a threaded bore (124) in an abutment (121) and the end of which acts on a levelling piece (125) mounted in the adjustable lever (107) or comprises same.

7. Device as claimed in one or more of the Claims 1 to 6 characterised in that adjustable lever (107) and tightening device (108) each form an independent attachment unit attachable by screwing on and accomodated in a housing (121).

8. Device as claimed in Claim 7, characterised by a measuring pin (127) resiliently inserted into a bore (126) in the housing (121) and supported on the adjustable lever (107) as a position indicator.

**Revendications**

1. Dispositif de centrage pour des matrices d'extrusion dans lesquelles une broche extérieure (1) délimite, conjointement avec une broche intérieure (2), une fente (3) pour le passage d'une matière plastique ou autre matière à extruder, ce dispositif comprenant une multiplicité d'organes de centrage à position réglable dans le sens radial, qui prennent appui sur la broche extérieure (1) et sont montés dans un plan radial, en étant répartis sur le pourtour de cette dernière, ces organes de réglage étant réalisés sous la forme de poussoirs de pression (6 ; 106) déplaçables dans une direction radiale, et des leviers de réglage (7 ; 107) qui sont montés à pivotement sur la broche extérieure (2) et peuvent être respectivement actionnés au moyen d'un dispositif de serrage (8 ; 108) en formant une transmission multiplicatrice de la force de serrage, ces leviers étant directement reliés aux poussoirs de pression (6 ; 106) en tant qu'éléments individuels d'actionnement, caractérisé en ce qu'à chaque poussoir de pression (6 ; 106) est affecté un levier de réglage à un bras (7 ; 107) qui, dans la région comprise entre son pivot (13 ; 113) et le point où il est en prise avec son dispositif de serrage (8 ; 108), est directement en contact avec son poussoir de pression (6 ; 106) et en ce que les axes d'articulation des leviers de réglage (7 ; 107) sont orientés parallèlement à l'axe longitudinal (10 ; 110) de la matrice.

2. Dispositif selon la revendication 1, caractérisé en ce que les poussoirs de pression (6 ; 106) prennent appui contre une surface de came (123) des leviers de réglage (107), par l'intermédiaire d'une tête de glissement arrondie (106').

3. Dispositif selon la revendication 1 ou 2, caractérisé en ce que le dispositif de serrage (8 ; 108) est un dispositif de serrage à bis et comprend une tige filetée (16), traversant une douille de liaison (14) articulée sur le levier de réglage (7), et un écrou de serrage (18) s'appliquant derrière la douille de liaison.

4. Dispositif selon la revendication 3, caractérisé en ce que la tige filetée (16) est articulée sur un pivot (13) formant en même temps l'axe d'articulation d'un levier de réglage voisin.

5. Dispositif selon la revendication 3 ou 4, caractérisé en ce que la douille de liaison est réalisée sous la forme d'une douille de support (14') d'un moteur de réglage (19) pouvant être fixé à celle-ci par une bride et entoure un accouplement (20) transmettant le couple de l'arbre du moteur à l'écrou de serrage (18').

6. Dispositif selon une ou plusieurs des revendications 1 à 4, caractérisé en ce que le dispositif de serrage (108) est formé par une vis de serrage (116) qui prend appui dans un alésage fileté (124) d'un contrepalier (121) et dont l'extrémité, agit sur ou entoure un élément de compensation monté dans le levier de réglage (107).

7. Dispositif selon une ou plusieurs des revendications 1 à 6, caractérisé en ce que le levier de réglage (107) et le dispositif de serrage (108) forment une unité structurelle autonome pouvant être vissée et logée dans une enveloppe (121).

8. Dispositif selon la revendication 7, caractérisé par une goupille de mesure (127), constituant un indicateur de position, qui prend appui contre le levier de réglage (107) et qui est logée en étant suspendue à un ressort dans un perçage (126) de l'enveloppe (121).

Fig.1.

Fig.2.

**FIG:3.**

**FIG:4.**

Fig. 5.

0 032 715

**FIG: 7.**

**FIG: 8.**

4